# EUROPÄISCHE PATENTSCHRIFT

(11) **EP 3 759 055 B1**
(45) Veröffentlichungstag und Bekanntmachung des Hinweises auf die Patenterteilung: **10.04.2024**
(21) Anmeldenummer: 19709398.2
(22) Anmeldetag: 27.02.2019
(51) Int. Cl.: C02F 1/52, C02F 3/04, C05F 3/06, C02F 1/66, C02F 101/38, C02F 103/20

(54) **VERFAHREN UND VORRICHTUNG ZUR GEWINNUNG VON DÜNGEMITTELN AUS ORGANISCHEN ABFÄLLEN**
METHOD AND APPARATUS FOR OBTAINING FERTILIZERS FROM ORGANIC WASTES
PROCÉDÉ ET DISPOSITIF POUR OBTENIR DES ENGRAIS À PARTIR DE DÉCHETS ORGANIQUES

(30) Priorität: 01.03.2018 DE 102018203113; 25.04.2018 DE 102018109991
(43) Veröffentlichungstag der Anmeldung: 06.01.2021
(73) Patentinhaber: Deutsches Zentrum für Luft- und Raumfahrt e.V., 51147 Köln (DE)
(72) Erfinder: BORNEMANN, Gerhild, 53639 Königswinter (DE); HAUSLAGE, Jens, 53919 Weilerswist (DE); OVERATH, Jan, 53489 Sinzig (DE); WASSER, Kai, 53359 Merzbach (DE)
(74) Vertreter: dompatent von Kreisler Selting Werner - Partnerschaft von Patent- und Rechtsanwälten mbB
(86) Internationale Anmeldenummer: PCT/EP2019/054816
(87) Internationale Veröffentlichungsnummer: WO 2019/166471

(56) Entgegenhaltungen:
- DE-A1- 10 127 545
- DE-A1-102011 100 143

## Beschreibung

Die vorliegende Erfindung betrifft eine Vorrichtung und ein Verfahren zur Behandlung von flüssigen Abfällen, welche Stickstoff und Phosphor aufweisen. Ziel ist die gezielte Düngemittelherstellung.

Im Bereich der Raumfahrt wird nach Möglichkeiten gesucht, die Ernährung auch im All auf natürliche Art und Weise sicherzustellen. Insbesondere das Wachstum von Pflanzen, die dann als Nahrungsquelle zur Verfügung stehen, wird untersucht. Um ein effektives Pflanzenwachstum zu ermöglichen sind unterschiedliche Düngemittel nötig. Dabei sollten die Dünger jedoch nicht von der Erde aus in einer Rakete transportiert werden müssen, sondern möglichst vor Ort auf einfache Art und Weise hergestellt werden können. Dies ist nicht nur bei der Raumfahrt relevant, sondern auch bei einer möglichen Besiedelung weiterer Planeten von Interesse.

Ein System zur Verstoffwechselung von organischen Stoffen und Verfahren zur Verstoffwechselung von organischen Stoffen ist in DE 10 2011 100 143 A1 beschrieben. Eine Anlage zur Düngemittelherstellung aus organischen Abfällen sowie ein Verfahren zur Düngemittelherstellung aus organischen Abfällen ist aus DE 10 2014 216 922 A1 bekannt. Mit diesen aus dem Stand der Technik bekannten Systemen wird Stickstoff aus flüssigen Abfällen als Grundlage für Düngemittel genutzt. Dabei ist eine vollständige Nitrifikation des organischen Stickstoffs nicht möglich. Der in den organischen Abfällen enthaltene organische Stickstoff wird zu maximal 50 % in Nitrat umgesetzt. Anschließend stoppt der Prozess. Weiterhin gibt es keine Möglichkeit, neben Stickstoff auch Phosphate abzutrennen, und zwar getrennt vom Stickstoff.

DE 10 2014 207 842 B3 offenbart die kombinierte Rückgewinnung von Phosphor, Kalium und Stickstoff aus wässrigen Reststoffen. So wird beispielsweise das Phosphat als Kalium-Magnesium-Phosphat abgetrennt. Drei Makronährstoffe für Pflanzen werden hierdurch in einem invariablen Verhältnis zusammen zurückgewonnen und müssen entsprechend verarbeitet werden. Gerade die getrennte Rückgewinnung von Stickstoff und anderen Makronährstoffen, wie beispielsweise Phosphaten, ist wünschenswert, um diese dann selektiv als Düngemittel einsetzen zu können.

Weitere gängigen Methoden umfassen die Fällung der Makronährstoffe. Diese Arbeiten mit Eisen- und Aluminiumsalzen wie beispielsweise Eisen(II)-Sulfat oder Aluminiumchlorid. Die Metallionen verbinden sich mit dem Phosphat und die schwer lösliche Verbindung fällt aus der Lösung aus. Mit den Fällmitteln werden so zusätzliche Ionen in die Flüssigkeit eingeführt, die nicht erwünscht sind.

Auch bekannt ist die Fällung durch Zugabe von Kalkmilch (Ca(OH)₂). Die Kalkmilch wird Abwasser so lange zugegeben bis der pH-Wert so hoch ist, dass in dem Abwasser gelösten Kalziumionen mit den Phosphationen als Kalziumphosphat ausfallen. Die dabei auftretende Erhöhung des pH-Wertes ist jedoch nachteilig, da diese dazu führt, dass Stickstoffverbindungen verstärkt ausdampfen. Genau dies soll jedoch vermieden werden, da der Stickstoff zu den Makronährstoffen zählt, die aus den flüssigen Abfällen möglichst vollständig zurück gewonnen werden sollen.

DE 101 27 545 A1 offenbart ein Verfahren und eine Vorrichtung zur weitergehenden Reinigung kommunaler Abwässer von Phosphaten, Ammoniumstickstoff sowie organischer Schmutzfracht nach Verlassen der Kläranlage. Die Vorrichtung ist ein vertikal durchströmter chemosorptiver Bodenfilter, der an seiner unteren und seinen seitlichen Begrenzungen wasserundurchlässig ist. In seinem unteren Bereich befindet sich eine Auffangschicht 2 aus grobem Kies, darüber eine Adsorptionsschicht 3 aus granuliertem Kalziumkarbonat und/oder Magnesiumkarbonat, vorzugsweise aus Kalk, in der die Phosphate chemisch zu wasserunlöslichem Kalzium- bzw. Magnesiumphosphat gebunden und über nebenvalente Kräfte an den Kalk angelagert werden. Auf der Adsorptionsschicht 3 liegt eine Trennschicht 5 aus feuchtigkeitsresistentem Vlies. Darauf befindet sich der Bodenkörper 6, bestehend aus einer dicken Sandschicht und die Verteilerschicht 7 aus Kies. In den beiden zuletzt genannten Schichten wird durch die dort befindliche Biomasse die organische Schmutzfracht abgebaut und der Ammoniumstickstoff zu Nitratstickstoff umgesetzt. Der zu den chemischen Vorgängen erforderliche Sauerstoff bzw. das Kohlendioxid kommen durch Verregnen des Kläranlagenablaufes 1 aus der Luft oder entstehen bei der Umsetzung der organischen Schmutzfracht.

Es besteht daher Bedarf an einem Verfahren, welches in Bezug auf Stickstoff die vollständige Nitrifikation organischen Stickstoffs aus flüssigen Reststoffen ermöglicht. Gleichzeitig soll auch die Rückgewinnung von Phosphaten möglich sein, soweit diese ebenfalls enthalten sind. Die Rückgewinnung von Stickstoff und Phosphaten soll dabei getrennt möglich sein.

Zudem ist im Stand der Technik beschrieben, dass Ammoniakgehalte von oberhalb 2,5 mg NH3-N/I die Nitrifikation nachteilig beeinflussen, dass sie zur Instabilität des Systems führen sollen. Weiterhin sollen höhere Stickstoff/Urinkonzentration die Umsetzungsrate verringern. Es besteht daher weiterhin Bedarf an einem Verfahren, mit welchem auch flüssige Abfälle mit hohen Stickstoffgehalten, wie beispielsweise reinem Urin, verarbeitet werden können. Ebenso besteht selbstverständlich Bedarf an einer Vorrichtung, mit welchen diese Verfahren durchgeführt werden können.

Überraschenderweise hat sich gezeigt, dass das in Kontakt bringen flüssiger Abfälle mit einem basischen Feststoff, der sich insbesondere durch das in Kontakt bringen löst, die im Stand der Technik beschriebenen Nachteile vermeidet. In einer ersten Ausführungsform wird daher die der vorliegenden Erfindung zugrunde liegende Aufgabe gelöst durch eine Vorrichtung gemäß Anspruch 1 sowie ein Verfahren unter Verwendung der Vorrichtung, wie in Anspruch 3 beansprucht. Vorteilhafte Ausgestaltungen sind in den Unteransprüchen beansprucht.

Dementsprechend betrifft die vorliegende Erfindung Vorrichtung zur Durchführung eines Verfahrens zur Behandlung flüssiger Abfälle, welche organische Bestandteile, die Stickstoff und Phosphor enthalten, aufweisen, zur Herstellung von Düngemitteln, wobei Stickstoff in Form einer organischen Stickstoff-Verbindung enthalten ist, welche zu Nitrat umgewandelt wird, und man während dieser Umwandlung die Abfälle mit einem basischen Feststoff in Kontakt bringt, wodurch der pH-Wert der Abfälle im schwach basischen, neutralen oder sauren gehalten wird, wobei Stickstoff und Phosphor getrennt voneinander aus den Abfällen entfernt werden, wobei die Vorrichtung folgendes umfasst:
- mindestens ein Gehäuse (2) mit einem langgestreckten Raum,
- mindestens eine Einlassöffnung (1) an einem Ende des Gehäuses (2) zum Einlass der flüssigen Abfälle,
- mindestens eine Auslassöffnung (7) an dem der Einlassöffnung (1) gegenüberliegenden Ende des Gehäuses (2),
- Rückhaltevorrichtungen (6) im Inneren des Gehäuses zur Unterteilung des Raumes im Inneren des Gehäuses in Kompartimente,
- wenigstens ein erstes Füllmaterial (3) und wenigstens ein hiervon verschiedenes zweites Füllmaterial (5), , welche im Inneren des Gehäuses (2) vorliegen und durch die Rückhaltevorrichtungen (6) an einer vorgesehenen Position gehalten werden, wobei das wenigstens eine erste Füllmaterial (3) ein poröses Füllmaterial ist, an dessen Oberfläche Mikroorganismen sich ansiedeln können, welche Stickstoff und gegebenenfalls Phosphor aus den flüssigen Abfällen aerob abbauen, und das wenigstens eine zweite Füllmaterial (5) ein basischer

Feststoff ist, der ein Carbonat oder ein Hydrogencarbonat mit Alkalimetallen oder Erdalkalimetallen als Gegenion ist,
- mindestens eine Öffnung (4) an der Längsseite des Gehäuses (2), durch welche Füllmaterial (3, 5) ins Innere des Gehäuses eingebracht werden kann,
- einen Vorratstank (8) in den die flüssigen Abfälle durch die Auslassöffnung (7) gelangen, wobei der Vorratstank (8) wenigstens einen ersten Auslass (12) und wenigstens einen zweiten Auslass (13) aufweist, wobei durch den ersten Auslass (12) eine flüssige Phase (9), die das Nitrat enthält, und durch den zweiten Auslass (13) eine feste Phase (11), die Phosphat als Phosphatsalz enthält, aus dem Vorratstank (8) entfernt werden können, sowie
- eine Pumpe (10) im Inneren des Vorratstanks,
wobei das Gehäuse (2) nicht in den Vorratstank (8) eingetaucht ist, sodass die flüssigen Abfälle wieder in Richtung der Einlassöffnung in einem Kreislauf gepumpt werden können.

Ebenso betrifft die Erfindung ein Verfahren unter Verwendung einer zuvor beschriebenen Vorrichtung zur Behandlung flüssiger Abfälle, welche organische Bestandteile, die Stickstoff und Phosphor enthalten, aufweisen, zur Herstellung von Düngemitteln, wobei Stickstoff in Form einer organischen Stickstoff-Verbindung enthalten ist, wobei die flüssigen Abfälle durch die mindestens eine Einlassöffnung (1) in das Innere des Gehäuses (2) eingebracht werden, wobei die flüssigen Abfälle dann in Kontakt mit den Füllmaterialen (3, 5) und danach durch die mindestens eine Auslassöffnung (7) in den Vorratstank (8) gelangen, wobei die flüssigen Abfälle von dem Vorratstank (8) mittels der Pumpe (10) wieder in Richtung der Einlassöffnung gepumpt werden, so dass ein Kreislauf entsteht, wobei an den Oberflächen des porösen Füllmaterials (3) Mikroorganismen sich ansiedeln, welche Stickstoff und gegebenenfalls Phosphor aus den flüssigen Abfällen aerob abbauen, so dass Stickstoff zu Nitrat umgewandelt wird, wobei die flüssigen Abfälle an dem basischen Feststoff (5) vorbeifließen, wodurch der pH-Wert der Abfälle im Bereich von 8 oder weniger gehalten wird, wobei durch den ersten Auslass (12) eine flüssige Phase, die Nitrat enthält, und durch den zweiten Auslass (13) eine feste Phase, die Phosphat als Phosphatsalz enthält, aus dem Vorratstank (8) getrennt voneinander aus den Abfällen entfernt werden.

Flüssige Abfälle im Sinne der vorliegenden Erfindung sind insbesondere Abwasser, Urin oder Gülle. Flüssig im Sinne der vorliegenden Erfindung meint, dass es sich um fließfähige Abfälle handelt. Die enthaltenen organischen Stoffe können dabei in Lösung vorliegen. Bei den flüssigen Abfällen kann es sich beispielsweise auch um eine Suspension handeln.

Dabei können erfindungsgemäß auch solche flüssigen Abfälle bearbeitet werden, deren Stickstoffgehalt im Bereich von einigen Gramm pro Litern beträgt. Insbesondere beträgt der Gesamtstickstoffgehalt der flüssigen Abfälle bis zu 15 g/L. im Stand der Technik beschriebene Verfahren ermöglichen üblicherweise lediglich die auf Reinigung einfacher Abwässer. Hier liegt der Stickstoffgehalt im Milligramm Bereich (mg/L). Das erfindungsgemäße Verfahren ermöglicht somit die auf Reinigung flüssiger Abfälle, die einen deutlich höheren Stickstoffgehalt aufweisen. Das erfindungsgemäße Verfahren ermöglicht somit auch die Verwendung von reinem Urin als flüssigem Abfall. Dies ist insbesondere bei einer Anwendung des Verfahrens in der Luft- und Raumfahrt wesentlich.

Das erfindungsgemäße Verfahren kann jedoch nicht nur in der Luft- und Raumfahrt eingesetzt werden. Gerade Gülle ist ein Abfallprodukt, welches in der Landwirtschaft in großen Mengen anfällt. Gülle kann direkt als Dünger auf Felder aufgebracht werden. Dies ist jedoch mit einer deutlichen Geruchsbelästigung verbunden. Zudem kann die Konzentration an Nährstoffen, wie beispielsweise Stickstoff oder Phosphaten, nicht kontrolliert oder nach Bedarf eingestellt werden, wenn die Gülle direkt als Düngemittel genutzt wird. Das erfindungsgemäße Verfahren ermöglicht nun die effektive Nutzung von Gülle und gleichzeitig die Kontrolle über die Menge an Nährstoffen die auf ein Feld aufgebracht werden.

Die Nitrifikation organischer Stickstoffverbindungen hin zu Nitrat ist ein an sich bekanntes Verfahren mit den folgenden Schritten - beispielhaft gezeigt für Harnstoff:
(1) Hydrolyse von Harnstoff zu Ammoniak: (NH₂)₂CO + H₂O → CO₂ + 2 NH₃
(2) Oxidation von Ammoniak zu Nitrit: 2 NH₃ + 3 O₂ → 2 NO₂⁻ + 2 H⁺ + 2 H₂O
(3) Oxidation von Nitrit zu Nitrat: 2 NO₂⁻ + O₂ → 2 NO₃⁻

Dies läuft bei unterschiedlichen pH-Werten ab. Durch die im Stand der Technik beschriebenen Verfahren herrscht jedoch häufig ein stark basischer pH-Wert vor. Überraschenderweise hat sich gezeigt, dass ein schwach basischer und insbesondere ein neutraler oder sogar saurer pH-Wert Bereich erfindungsgemäß bevorzugt ist. Erfindungsgemäß erfolgt daher das in Kontakt bringen bei einem pH-Wert von 8 oder weniger, vorzugsweise von 7,5 oder weniger, insbesondere von 7 oder weniger, besonders von 6,5 oder weniger, bevorzugt von 6 oder weniger, besonders bevorzugt von 5,5 oder weniger. Der pH-Wert der flüssigen Abfälle liegt bei der Behandlung vorzugsweise in einem Bereich von 0 bis 8, insbesondere im Bereich von 0,5 bis 7, vorzugsweise im Bereich von 1 bis 6, bevorzugt im Bereich von 1,5 bis 5, besonders im Bereich von 2 bis 4,5, insbesondere bevorzugt im Bereich von 2,5 bis 4, besonders bevorzugt im Bereich von 3 bis 3,5. Es hat sich gezeigt, dass bei diesen pH-Werten der basische Feststoff besonders gut löslich ist und die Nitrifikation dennoch abläuft.

Der Stickstoff liegt in den flüssigen Abfällen in Form einer organischen Stickstoffverbindung vor. Insbesondere handelt sich bei der organischen Stickstoff-verbindung um Harnstoff oder Kreatinin. Phosphor liegt in den flüssigen Abfällen üblicherweise in Form von Phosphaten oder organisch gebundenem Phosphor vor.

Die getrennte Entfernung von Stickstoff und Phosphor aus den Abfällen ermöglicht eine Herstellung von Düngemitteln, die nur Stickstoff bzw. nur Phosphate enthalten. So können die entsprechenden Düngemittel nach Bedarf gezielt eingesetzt werden, sodass eine Überdüngung vermieden werden kann.

Das in Kontakt bringen der flüssigen Abfälle mit dem basischen Feststoff erfolgt dadurch, dass die flüssigen Abfälle an dem basischen Feststoff vorbeifließen. Dies kann beispielsweise dadurch erfolgen, dass das erfindungsgemäße Verfahren in einem Filter, insbesondere in einem Rieselfilter erfolgt. Die Verwendung eines Rieselfilters hat den Vorteil, dass der für die Reaktion benötigte Sauerstoff kontinuierlich eingebracht wird, sodass die Oxidation von Stickstoff zur Nitrat vollständig erfolgen kann.

Der basischen Feststoff ist erfindungsgemäß derart ausgewählt, dass sie in dem Gesamtsystem keine nachteiligen Auswirkungen hat. Insbesondere ist der basische Feststoff derart ausgewählt, dass er keine Fremdionen in das System eindringt, die nicht bereits vorher vorhanden waren oder als Nitratsalz oder Phosphatsalz ausgeschieden werden können.

Es wird vermutet, dass Mikroorganismen ein wesentlicher Faktor für die Umwandlung der organischen Stickstoffverbindungen hin zu Nitrat sind. Entsprechende Mikroorganismen sind ubiquitär vorhanden, beispielsweise in den flüssigen Abfällen selbst, aber auch in der Luft, Böden, Gesteinen etc. Entsprechend ist dem basischen Feststoff derart ausgewählt, dass er nicht schädlich für Mikroorganismen ist. Erfindungsgemäß ist der basische Feststoff ein Alkalimetall Carbonat oder Hydrogencarbonat bzw. ein Erdalkalimetall Carbonat oder Hydrogencarbonat.

In einer besonders bevorzugten Ausführungsform ist der basische Feststoff ein Carbonat, insbesondere ein Erdalkali-Carbonat, besonders bevorzugt Kalziumcarbonat CaCO₃. Das hierin enthaltene Kalzium ist für vorhandene Mikroorganismen nicht schädlich. Zudem bildet es mit Phosphat Kalziumphosphat, welches als Feststoff ausfällt. Gleichzeitig kann das Carbonat-Ion mit dem organischen Stickstoff reagieren, sodass Nitrat entsteht. Als Nebenprodukt fällt hier COz an, welches dann als Gas entweichen kann.

Phosphor fällt erfindungsgemäß als Phosphat in einer festen Phase an, während Stickstoff in Form von Nitrat in einer flüssigen Phase vorliegt. Dies ermöglicht auch am Ende des Verfahrens, Phosphor und Stickstoff getrennt voneinander zu gewinnen. Das Phosphat, welches beispielsweise als Kalziumphosphat vorliegt, kann in dieser Form als Düngemittel eingesetzt werden.

Die flüssige Phase, welche das Nitrat aufweist, wird vorzugsweise in ihrem Volumen reduziert. Dies kann dadurch erfolgen, dass die flüssige Phase erwärmt und somit getrocknet wird. Hierdurch werden dann Nitratsalze erhalten, die als Düngemittel eingesetzt werden können.

Wird Gülle als flüssiger Abfall in dem Verfahren verwendet, so wird die Gülle bevorzugt aus einer Biogasanlage verwendet. Die Gülle kann so nachhaltig genutzt werden. In einem 1. Schritt kann in einer Biogasanlage aus der Gülle Energie gewonnen werden. Die bei der Biogas-Entstehung freiwerdende Abwärme kann genutzt werden, um die flüssige Phase zu trocknen. Anschließend kann die Gülle aus der Biogasanlage dann nach dem erfindungsgemäßen Verfahren behandelt werden, sodass die Gülle nicht nur zur Energiegewinnung, sondern auch zur Düngemittelgewinnung genutzt werden kann. Durch die Nutzung der Abwärme der Biogasanlage zum Erhalt der Nitratsalze ist zudem auch die Düngemittelherstellung umweltfreundlich möglich, ohne dass hier große Mengen CO₂ entstehen.

Im Sinne eines umweltfreundlichen Verfahrens wird der basische Feststoff als Naturstoff hinzugegeben. Vorzugsweise handelt es sich bei dem basischen Feststoff somit um ein in der Natur vorkommende basische Verbindung. Auch aus diesem Grunde ist Kalziumcarbonat der bevorzugte basische Feststoff. Dieser liegt beispielsweise in Form von Muschelschalen, Kreide, Kalkstein oder Marmor vor. In dieser Form kann das Kalziumcarbonat auch ohne weitere Aufarbeitung verwendet werden. Die entsprechenden Materialien können dabei als Ganzes (Muschelschalen) oder als Bruchstücke eingesetzt werden. Relevant ist lediglich, dass der flüssige Abfall mit den entsprechenden Materialien in Kontakt kommt und der Fluss nicht behindert wird. Insbesondere handelt es sich daher entweder um poröse Materialien oder die Korngröße wird entsprechend ausgewählt. Die Korngröße, welche der Größe der Muschelschalen oder der Bruchstücke der Materialien in der größten Ausdehnung entspricht, sollte 5 mm nicht unterschreiten.

Insbesondere im Bereich der Luft- und Raumfahrt sind Muschelschalen als basischer Feststoff besonders bevorzugt. Die Muscheln können zunächst als Nahrungsmittel dienen. Der hierbei entstehende Abfall, nämlich die Muschelschalen, können dann zur Herstellung eines Düngers für Pflanzen verwendet werden, sodass der Nährstoffkreislauf quasi geschlossen ist und kaum unnutzbare Abfälle anfallen.

Das erfindungsgemäße Verfahren kann als kontinuierliches Verfahren durchgeführt werden. Es ist jedoch auch möglich, dass es als Batchprozess durchgeführt wird. Der Batchprozess ist bevorzugt. Dabei wird der flüssige Abfall mehrfach im Kreis gepumpt und mehrfach mit dem basischen Feststoff in Kontakt gebracht. Dabei kann die Fließrate beliebig eingestellt werden. Werte bis zu 500 I/h bei einem Filtervolumen von 6 I sind ohne jegliches Problem möglich. Auch an die Temperatur sind keine besonderen Anforderungen zu stellen. Das erfindungsgemäße Verfahren erfolgt vorzugsweise bei Raumtemperatur, also bei Temperaturen im Bereich von 20° C bis 30° C. Bei zu hohen Temperaturen erfolgt im Prozess ein Verdampfen von Wasser, welches zu diesem Zeitpunkt noch nicht gewünscht ist. Zudem besteht die Vermutung, dass am Prozess beteiligt Mikroorganismen bei höheren Temperaturen nicht mehr aktiv sind. Auch bei zu geringen Temperaturen sinkt die Aktivität der Mikroorganismen. Zudem würde eine aktive Kühlung benötigt, die dann wieder zu einem erhöhten Energiebedarf führt, der jedoch nicht erwünscht ist.

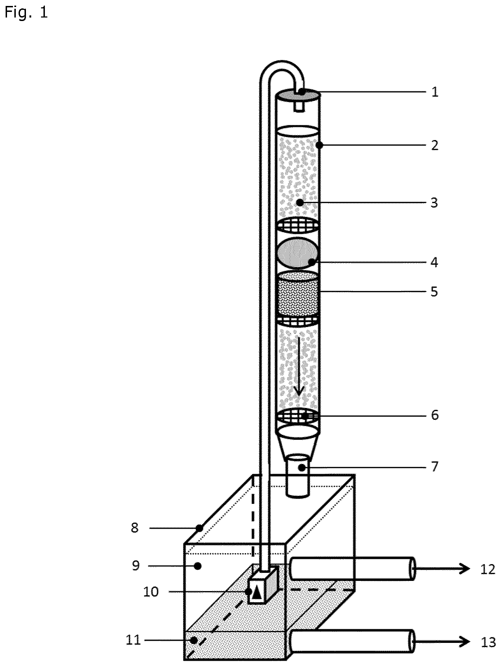

Figur 1 zeigt schematisch eine erfindungsgemäße Vorrichtung. Diese umfasst:
- mindestens ein Gehäuse (2) mit einem langgestreckten Raum,
- mindestens eine Einlassöffnung (1) an einem Ende des Gehäuses (2) zum Einlass der flüssigen Abfälle,
- mindestens eine Auslassöffnung (7) am dem der Einlassöffnung (1) gegenüberliegenden Ende des Gehäuses (2),
- Rückhaltevorrichtungen (6) im Inneren des Gehäuses zur Unterteilung des Raumes im Inneren des Gehäuses in Kompartimente,
- wenigstens zwei voneinander verschiedene Füllmaterialien (3, 5), welche durch die Rückhaltevorrichtungen (6) an der vorgesehenen Position gehalten wird,
- mindestens eine Öffnung (4) an der Längsseite des Gehäuses (2), durch welche Füllmaterial (3, 5) ins Innere des Gehäuses eingebracht werden kann,
- einen Vorratstank (8) sowie
- eine Pumpe (10) im Inneren des Vorratstanks,
wobei das Gehäuse (2) nicht in den Vorratstank (8) eingetaucht ist.

Die Vorrichtung weist im Inneren des mindestens einen Gehäuses (2) wenigstens ein erstes Füllmaterial (3) und wenigstens ein hiervon verschiedenes zweites Füllmaterial (5) auf, wobei das wenigstens eine zweite Füllmaterial (5) ein basischer Feststoff zur Durchführung des erfindungsgemäßen Verfahrens ist. Das wenigstens eine erste Füllmaterial (3) ist erfindungsgemäß ein poröses Füllmaterial. An den Oberflächen des porösen Füllmaterials (3) siedeln sich Mikroorganismen an, welche Stickstoff und gegebenenfalls Phosphor aus den flüssigen Abfällen abbauen. Insbesondere die in Nitrate umgewandelten organischen Stickstoffverbindungen werden von den nachfließenden flüssigen Abfällen aufgenommen und in den Vorratstank (8) transportiert.

Der Abbau der flüssigen Abfälle erfolgt weitestgehend aerob. In dem porösen Füllmaterial (3) wird durch den nachfließenden flüssigen Abfall Sauerstoff eingebracht.

Das poröse Füllmaterial (3) kann mineralisch sein. Insbesondere kann vorgesehen sein, dass das poröse Füllmaterial (3) Vulkangestein und/oder ein Tonmineral ist. Ferner ist vorzugsweise vorgesehen, dass das Füllmaterial Schüttgut ist.

Bei dem erfindungsgemäßen Verfahren wird durch die mindestens eine Einlassöffnung (1) der flüssiger Abfall in das Innere des Gehäuses (2) ein gebracht. Die flüssigen Abfälle gelangen dann aufgrund der Schwerkraft durch das Innere des Gehäuses in die Kompartimente, die durch Rückhaltevorrichtungen (6) unterteilt werden. In diesen Kompartimenten befinden sich die Füllmaterialien (3,5), sodass die flüssigen Abfälle zwangsweise mit den Füllmaterialien in Kontakt gelangen. Durch eine Auslassöffnung (7) an dem der Einlassöffnung (1) gegenüberliegenden Ende des Gehäuses (2) gelangen die flüssigen Abfälle dann in einen Vorratstank (8). Von diesem aus werden die flüssigen Abfälle dann mittels einer Pumpe (10) wieder in Richtung der Einlassöffnung (1) gepumpt, sodass ein Kreislauf entsteht. In den Vorratstank (8) werden die flüssigen Abfälle auch zu Beginn des Verfahrens eingebracht.

In einem Batchprozess wird zunächst eine definierte Menge an flüssigen Abfällen in den Vorratstank (8) gegeben. Anschließend erfolgt das Umpumpen der Flüssigkeit. Ist der enthaltene Stickstoff sowie vorzugsweise der enthaltene Phosphor vollständig zur Nitrat bzw. Phosphat reagiert, befindet sich im Vorratstank (8) am Boden ein Feststoff. Hierbei handelt es sich um ein Phosphatsalz. In der im Vorratstank (8) befindlichen Flüssigkeit sind die Nitrate enthalten.

In einem kontinuierlichen Prozess werden die flüssigen Abfälle ebenfalls im Kreis gepumpt, durchlaufen den lang gestreckten Raum des Gehäuses (2) also mehrfach.

Weiterhin weist der Vorratstank (8) erfindungsgemäß wenigstens einen 1. Auslass (12) und/oder wenigstens einen 2. Auslass (13) auf. Durch den 1.

Auslass (12) kann eine flüssige Phase (9), die die Nitrate enthält, und durch den 2. Auslass (13) eine feste Phase (11), die die Phosphate enthält, aus dem Vorratstank (8) entfernt werden. Dies kann sowohl beim kontinuierlichen Verfahren als auch beim Batchprozess genutzt werden. Beim kontinuierlichen Verfahren weist der Vorratstank (8) vorzugsweise weiterhin einen zusätzlichen Einlass auf, durch welchen die flüssigen Abfälle kontinuierlich in den Vorratstank (8) geleitet werden können. Der 1. Auslass (12) kann weiterhin eine Filtervorrichtung aufweisen, die in der Flüssigkeit verbliebene organische Abfälle herausfiltert.

Der Vorratstank (8) kann ein geschlossenes Behältnis oder ein offenes Behältnis sein. Vorzugsweise handelt sich um ein offenes Behältnis, sodass ausreichend Kontakt mit Sauerstoff vorhanden ist, um aerobe Bedingungen zu ermöglichen. Das Behältnis kann jedoch auch abgedeckt sein und, um mögliche entstehende Gerüche zu verringern. Die Abdeckung ist dann so gewählt, dass dennoch Sauerstoff aus der Umgebungsluft mit den flüssigen Abfällen in Kontakt kommen kann.

In einem bevorzugten Ausführungsbeispiel der Erfindung ist vorgesehen, dass das Verhältnis zwischen Füllvolumen des Vorratstanks (8) und Schüttvolumen des porösen Materials (1. Füllmaterial (3)) zwischen 4:1 und 7:1 beträgt, vorzugsweise 6,25:1. Ein derartiges Verhältnis hat sich als besonders vorteilhaft herausgestellt. Unter Schüttvolumen wird nach gängiger Definition das Volumen der einzelnen Artikel des Füllmaterials sowie das Volumen eines die Hohlräume der Partikel einnehmenden Fluid verstanden. Das Schüttvolumen schließt somit Zwischenräume, Hohlräume und gegebenenfalls Hauptwerkspuren des Füllmaterials ein.

Im nachfolgenden Ausführungsbeispiel wird die vorliegende Erfindung in Detail beschrieben, ohne jedoch auf die dort offenbarten Merkmale beschränkt zu sein.

Als flüssiges Abwasser wurde eine Flüssigkeit mit synthetisch hergestelltem Urin eingesetzt. Ein entsprechendes Herstellungsverfahren ist von Feng, D. und Wu, Z. (Culture of Spiruline platensis in human urine for biomass production ans O2 evolution. J. Zhejang Univ. Science B, 7 (1), 34-37, 2006) beschrieben. Dies ermöglicht definierte Mengen an organischem Stickstoff in der Lösung sowie vergleichbare Bedingungen.

Untersucht wurden flüssiger Abfälle mit Urinkonzentrationen von 40 %, 60 %, 80 % und 100 %. Konzentrationen von 7 % oder weniger konnten aufgrund der großen Flüssigkeitsmenge nicht sinnvoll gehandhabt werden. Angegeben sind hier jeweils die Vol.-%, soweit nicht explizit anders erläutert.

### 1. Filtermaterial

Als Gehäuse wurden PVC Röhren eingesetzt. Diese wurden mit "Roter Eifellava" als Prüfungsfüllmaterial gefüllt. Diese Lava wird in der Nähe von Köln gewonnen. Die Zusammensetzung der Lava ist beschrieben von Bornemann, G. et al. (Bornemann, G., Waßer, K., Tonat, T., Möller, R., Bohmeier, M. and Hauslage, J. Natural microbial populations in a water-based biowaste management system for space life support, Adv. Space Res. 7, 39-52, 2015). Die Partikelgröße lag im Bereich von 16-25 mm. Die durchschnittliche Porosität betrug 0,35.

Als basischer Feststoff wurde Kalziumcarbonat in Form von Muschelschalen eingesetzt. Der Kalziumcarbonatgehalt betrug 70-80 %. Das obere und untere Ende der PVC Röhre war mit Deckeln verschlossen. Das Volumen der PVC Röhren betrug 6 I.

Als Vorratstank wurde ein 30 I PVC Tank (Curver, Deutschland: Unibox 30l mit Deckel) eingesetzt.

In dem Tank befand sich eine Pumpe für ein Aquarium (Ehheim, Deutschland: Ehheim compact 1000 mit 1000 I/h Maximum; Energieverbrauch: 23 W). Während des Verfahrens war der Tank mit einem Deckel geschlossen, um die Zusammensetzung der Testflüssigkeit zu kontrollieren.

Zusätzlich zu der Roten Eifellava wurden die PVC Röhren mit einem Gramm getrockneter Gartenerde befüllt, welche vor den Räumlichkeiten des Labors eingesammelt wurde.

Der synthetisch hergestellte Urin enthielt etwa 7780 mg N/L. Neben Harnstoff (etwa 7000 mg/L) stellen Kreatinin (380 mg N/L) und Ammoniumchlorid (400 mg N/L) die weiteren Stickstoffquellen dar. Phosphor ist in Form von Phosphat (890 mg PO4-P/L) enthalten. Zu Beginn betrug der pH-Wert der Lösung 6,8.

### 2. Versuchsaufbau

Zwölf Filtereinheiten (PVC Röhren A-L) wurden jeweils in Dreiergruppen zusammengefasst. Die Filter A, B, und C erhielten unverdünnten synthetischen Urin (100%) und zwar in einer Menge von jeweils 30L.

D, E und F wurden mit 80%igem Urin befüllt (24L synthetischer Urin verdünnt mit 6L Leitungswasser). G, H und I wurden mit 60% Urinlösung (18L synthetischer Urin verdünnt mit 12L Leitungswasser) bestückt. Die Filter J, K und L enthielten 12L synthetischer Urin verdünnt mit 18L Leitungswasser, also eine 40%ige Lösung.

Temperatur und pH-Wert der Lösung wurden in allen Vorratstank drei Mal pro Woche gemessen (Temperatur: WTW Multi 1970i mit TetraCon 325; pH: Sentix 41; beide von der Firma WTW, Deutschland).

Die Messung erfolgte über einen Zeitraum von 646 Tagen und begann mit der Befüllung der Röhren mit den Füllstoffen. Der erste Zeitraum ist als Startzeitraum anzusehen.

Alle Ionen (NH₄⁺, NO₂⁻, NO₃⁻, PO₄³⁻, CA²⁺, SO₄²⁻, K⁺, Na⁺, Cl⁻, Mg²⁺) wurden in mg/l mit einem Ionenaustauschchromatographen der Firma Metrohm, Deutschland (IC-System Professional 850) bestimmt. Es wurde im Batchverfahren gearbeitet.

In den Figuren 2-5 sind die pH-Werte und die Konzentrationen der Stickstoffverbindungen gezeigt (Fig. 2: 100%; Fig. 3: 80%; Fig. 4: 60% und Fig. 5: 40%).

### 3. Ergebnisse

Es zeigte sich, dass die Filter zunächst wenig Aktivität zeigen. Dies lag an der Aktivität der Mikroorganismen. Nachdem diese mit der Stickstoffumwandlung begonnen haben, konnte in allen Fällen die Umwandlung in Nitrat beobachtet werden. In der nachfolgenden Tabelle 1 sind die relevanten Parameter der unterschiedlichen Versuche dargestellt.

**Tab. 1. Key parameters of filter performance during the 646 day test run. Proc. = processing, d = days, v = conversion rate, parameters marked with* do not include the data of irregulär runs.**

| | | **100%** | | | **80%** | |
|---|---|---|---|---|---|---|
| | **A** | **B** | **C** | **D** | **E** | **F** |
| starting period [d] | 173 | 159 | 154 | 138 | 110 | 103 |
| no. of batches | 3 | 3 | 5 | 5 | 4 | 4 |
| no. of irregular runs | 0 | 0 | 0 | 0 | 0 | 0 |
| Processing time [d] | 128 | 128 | 95 | 82 | 95 | 103 |
| proc. time [range] | 105 - 209 | 105 - 209 | 61 - 113 | 55 - 164 | 71 - 164 | 55 - 164 |
| v [mg NO3-N/d] | 999 | 859 | 2024 | 2049 | 1706 | 1531 |
| v [range] | 648 - 1691 | 652 - 1619 | 1575 - 2241 | 905 - 2776 | 865 - 2056 | 1084 - 3007 |
| v* [mg NO3-N/d] | | | | | | |
| v* [range] | | | | | | |
| % N in NO3-N* | 63 | 59 | 78 | 89 | 81. | 86 |
| mg urea | | | | | | |
| degraded/d* | 2385 | 2235 | 4213 | 4314 | 3394 | 3832 |

| | | **60%** | | | **40%** | |
|---|---|---|---|---|---|---|
| | **G** | **H** | **I** | **J** | **K** | **L** |
| starting period [d] | 138 | 367 | 142 | 188 | 82 | 72 |
| no. of batches | 6 | 4 | 7 | 6 | 9 | 9 |
| processing time [d] | 71 | 71 | 60 | 50 | 51 | 49 |
| proc. time [range] | 46 - 112 | 49 - 140 | 31 - 120 | 29 - 175 | 31 - 76 | 26 - 100 |
| v [mg NO3-N/d] | 1743 | 1624 | 1774 | 1024 | 1510 | 1234 |
| v [range] | 856 - 2625 | 607 - 2063 | 895 - 4715 | 88 - 1477 | 472 - 4152 | 486 - 2746 |
| v* [mg NO3-N/d] | | 1998 | | 1303 | 1565 | 1315 |
| v* [range] | | 920 - 4152 | | 784 - 1477 | 920 - 4152 | 838 - 2746 |
| % N in NO3-N* | 84 | 97 | 81 | 69 | 91 | 73 |
| mg urea | | | | | | |
| degraded/d* | 3880 | 3171 | 4435 | 1850 | 3590 | 3020 |

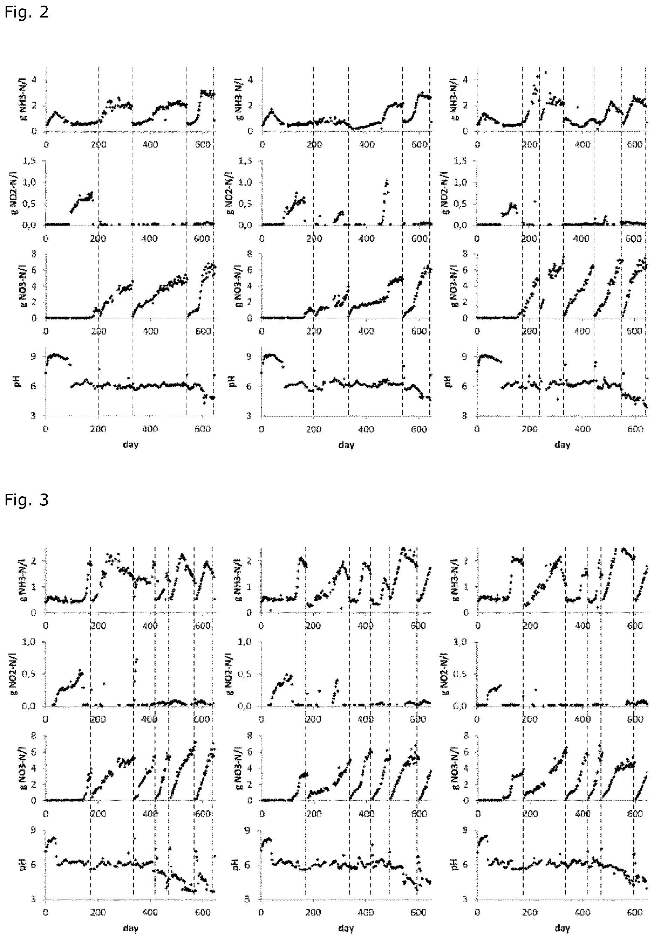

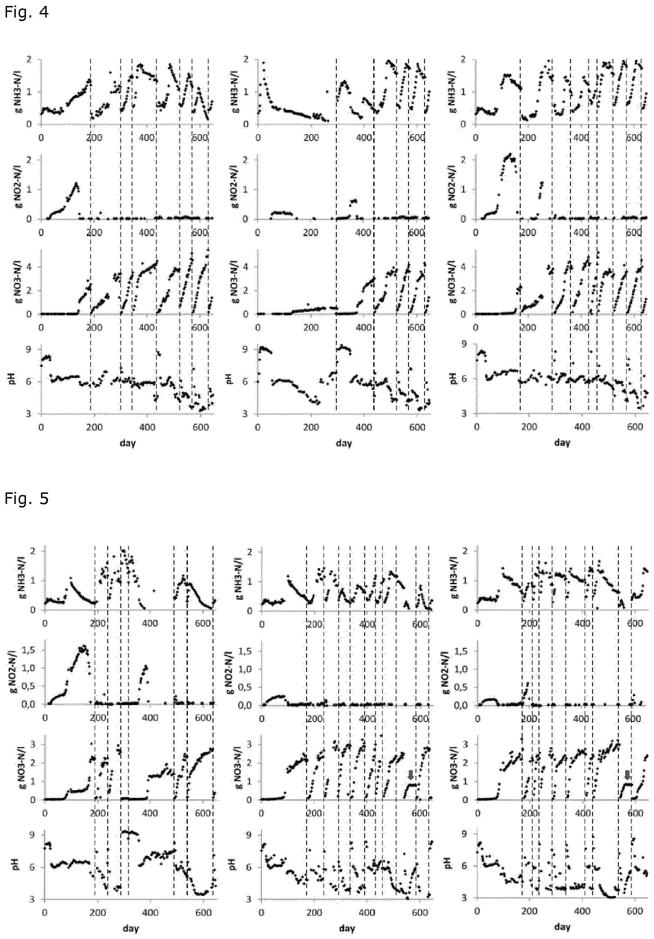

Figur 2 zeigt dabei die Ergebnisse mit 100% Lösung. Die Nitratherstellung begann hier um den 160sten Tag. Figur 3 zeigt die Messergebnisse der 80% Lösung. Hier begann die Nitratherstellung etwa um den 120sten Tag. Die 60% Einheiten zeigten keinen einheitlichen Tag. Die Messwerte sind hier in Figur 4 dargestellt, während die 40% Lösung in Figur 5 gezeigt sind.

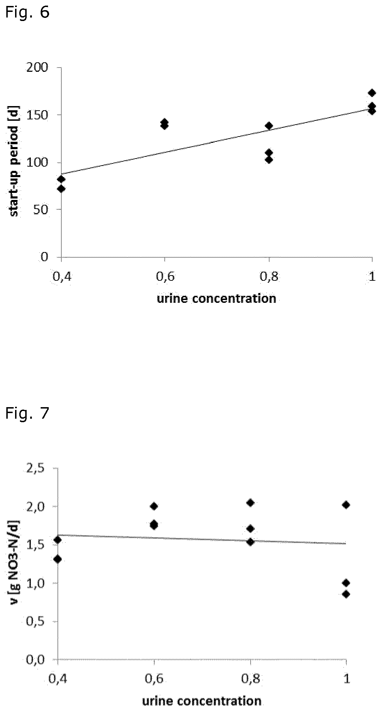

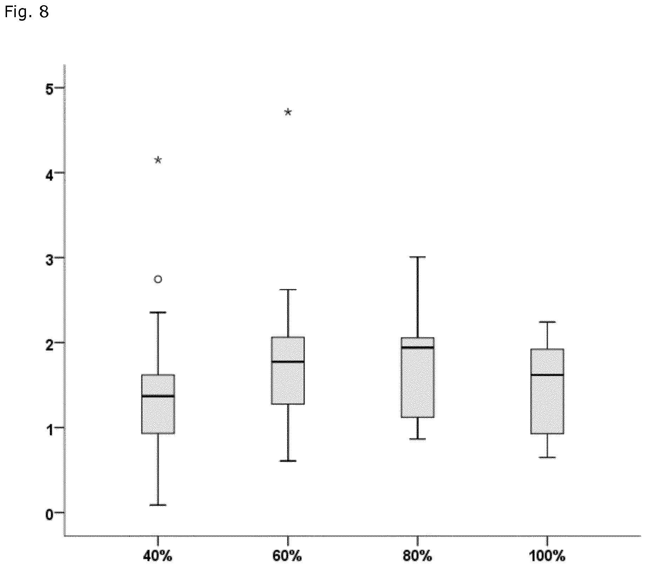

Figur 6 zeigt die Anlaufzeit in Abhängigkeit der Urinkonzentration. Hier zeigt sich, dass mit steigender Urinkonzentration der Prozess länger braucht, bis er beginnt. Die Stickstoffproduktion an sich ist jedoch nicht verringert, wie aus Figur 7 hervorgeht. In Figur 7 sind die Messwerte zusammengefasst. Ein Abfall in der Nitratherstellung mit steigender Urinkonzentration konnte, entgegen den Vermutungen aus dem Stand der Technik, nicht festgestellt werden. Auch die Stickstoffproduktionsarten innerhalb der unterschiedlichen Konzentrationen unterschieden sich nicht signifikant, wie in Figur 8 gezeigt.

Das erfindungsgemäße Verfahren ermöglicht daher die Behandlung von flüssigen Abwässern auch mit hohen Konzentrationen an Stickstoff, wobei eine annähernd vollständige Nitrifikation erfolgt. Zudem können die Makronährstoffe Stickstoff und Phosphor getrennt voneinander gewonnen werden, so dass auch eine selektive Düngung möglich ist.

## Patentansprüche

1. Vorrichtung zur Durchführung eines Verfahrens zur Behandlung flüssiger Abfälle, welche organische Bestandteile, die Stickstoff und Phosphor enthalten, aufweisen, zur Herstellung von Düngemitteln, wobei Stickstoff in Form einer organischen Stickstoff-Verbindung enthalten ist, welche zu Nitrat umgewandelt wird, und man während dieser Umwandlung die Abfälle mit einem basischen Feststoff in Kontakt bringt, wodurch der pH-Wert der Abfälle im schwach basischen, neutralen oder sauren gehalten wird, wobei Stickstoff und Phosphor getrennt voneinander aus den Abfällen entfernt werden, wobei die Vorrichtung folgendes umfasst:
- mindestens ein Gehäuse (2) mit einem langgestreckten Raum,
- mindestens eine Einlassöffnung (1) an einem Ende des Gehäuses (2) zum Einlass der flüssigen Abfälle,
- mindestens eine Auslassöffnung (7) an dem der Einlassöffnung (1) gegenüberliegenden Ende des Gehäuses (2),
- Rückhaltevorrichtungen (6) im Inneren des Gehäuses zur Unterteilung des Raumes im Inneren des Gehäuses in Kompartimente,
- wenigstens ein erstes Füllmaterial (3) und wenigstens ein hiervon verschiedenes zweites Füllmaterial (5), welche im Inneren des Gehäuses (2) vorliegen und durch die Rückhaltevorrichtungen (6) an einer vorgesehenen Position gehalten werden, wobei das wenigstens eine erste Füllmaterial (3) ein poröses Füllmaterial ist, an dessen Oberfläche Mikroorganismen sich ansiedeln können, welche Stickstoff und gegebenenfalls Phosphor aus den flüssigen Abfällen aerob abbauen, und das wenigstens eine zweite Füllmaterial (5) ein basischer Feststoff ist, der ein Carbonat oder ein Hydrogencarbonat mit Alkalimetallen oder Erdalkalimetallen als Gegenion ist,
- mindestens eine Öffnung (4) an der Längsseite des Gehäuses (2), durch welche Füllmaterial (3, 5) ins Innere des Gehäuses eingebracht werden kann,
- einen Vorratstank (8) in den die flüssigen Abfälle durch die Auslassöffnung (7) gelangen, wobei der Vorratstank (8) wenigstens einen ersten Auslass (12) und wenigstens einen zweiten Auslass (13) aufweist, wobei durch den ersten Auslass (12) eine flüssige Phase (9), die das Nitrat enthält, und durch den zweiten Auslass (13) eine feste Phase (11), die Phosphat als Phosphatsalz enthält, aus dem Vorratstank (8) entfernt werden können, sowie
- eine Pumpe (10) im Inneren des Vorratstanks,
wobei das Gehäuse (2) nicht in den Vorratstank (8) eingetaucht ist, sodass die flüssigen Abfälle wieder in Richtung der Einlassöffnung in einem Kreislauf gepumpt werden können.

2. Vorrichtung nach Anspruch 1, **dadurch gekennzeichnet, dass** das wenigstens eine erste Füllmaterial (3) ausgewählt ist aus Vulkangestein und/oder Tonmineral und/oder ein Schüttgut ist.

3. Verfahren unter Verwendung einer Vorrichtung gemäß Anspruch 1 oder 2 zur Behandlung flüssiger Abfälle, welche organische Bestandteile, die Stickstoff und Phosphor enthalten, aufweisen, zur Herstellung von Düngemitteln, wobei Stickstoff in Form einer organischen Stickstoff-Verbindung enthalten ist, wobei die flüssigen Abfälle durch die mindestens eine Einlassöffnung (1) in das Innere des Gehäuses (2) eingebracht werden, wobei die flüssigen Abfälle dann in Kontakt mit den Füllmaterialen (3, 5) und danach durch die mindestens eine Auslassöffnung (7) in den Vorratstank (8) gelangen, wobei die flüssigen Abfälle von dem Vorratstank (8) mittels der Pumpe (10) wieder in Richtung der Einlassöffnung gepumpt werden, so dass ein Kreislauf entsteht, wobei an den Oberflächen des porösen Füllmaterials (3) Mikroorganismen sich ansiedeln, welche Stickstoff und gegebenenfalls Phosphor aus den flüssigen Abfällen aerob abbauen, so dass Stickstoff zu Nitrat umgewandelt wird, wobei die flüssigen Abfälle an dem basischen Feststoff (5) vorbeifließen, wodurch der pH-Wert der Abfälle im Bereich von 8 oder weniger gehalten wird, wobei durch den ersten Auslass (12) eine flüssige Phase, die Nitrat enthält, und durch den zweiten Auslass (13) eine feste Phase, die Phosphat als Phosphatsalz enthält, aus dem Vorratstank (8) getrennt voneinander aus den Abfällen entfernt werden.

4. Verfahren nach Anspruch 1, **dadurch gekennzeichnet, dass** die flüssigen Abfälle Abwasser oder Gülle ist.

5. Verfahren nach einem der Ansprüche 3 oder 4, **dadurch gekennzeichnet, dass** der basische Feststoff CaCO₃ ist.

6. Verfahren nach einem der Ansprüche 3 bis 5, **dadurch gekennzeichnet, dass** das in Kontakt bringen in einem Filter, insbesondere einem Rieselfilter, erfolgt.

7. Verfahren nach Anspruch 1, **dadurch gekennzeichnet, dass** die Nitrathaltige flüssige Phase abgetrennt und getrocknet wird, so dass Nitratsalze erhalten werden.

## Claims

1. An apparatus for performing a process for treating liquid waste comprising organic components that contain nitrogen and phosphorus for the production of fertilizers, wherein nitrogen is contained in the form of an organic nitrogen compound, which is converted to nitrate, and during such conversion the waste is contacted with a basic solid, whereby the pH of the waste is maintained in a weakly alkaline, neutral or acidic range, wherein nitrogen and phosphorus are removed from the waste separately, said apparatus comprising:
- at least one housing (2) with an elongated space
- at least one inlet opening (1) at one end of the housing (2) for charging the liquid waste,
- at least one outlet opening (7) at the end of the housing (2) opposite the inlet opening (1),
- retention means (6) in the interior of the housing for dividing the space in the interior of the housing into compartments,
- at least one first filling material (3) and at least one second filling material (5) different therefrom, which are present in the interior of housing (2) and are retained at a provided position by the retention means (6), wherein said at least one first filling material (3) is a porous filling material, at the surface of which microorganisms may populate, which aerobically degrade nitrogen and optionally phosphorus from the liquid waste, and said at least one second filling material (5) is a basic solid, which is a carbonate or a hydrogencarbonate with alkali metals or alkaline earth metals as counter-ions,
- at least one opening (4) at the longitudinal side of the housing (2), through which filling material (3, 5) can be charged into the interior of the housing,
- a supply tank (8), in which the liquid waste arrives through the outlet opening (7), wherein said supply tank (8) has at least one first outlet (12) and at least one second outlet (13), wherein a liquid phase (9) containing the nitrate can be removed through the first outlet (12), and a solid phase (11) containing phosphate as a phosphate salt can be removed through the second outlet (13), from the supply tank (8), and
- a pump (10) within said supply tank,
wherein said housing (2) is not immersed into said supply tank (8), so that the liquid waste can be pumped back towards the inlet opening in a cycle.

2. The apparatus according to claim 1, **characterized in that** said at least one first filling material (3) is selected from volcanic rock and/or clay minerals, and/or is a bulk material.

3. A process using an apparatus according to claim 1 or 2, for treating liquid waste comprising organic components that contain nitrogen and phosphorus for the production of fertilizers, wherein nitrogen is contained in the form of an organic nitrogen compound, wherein said liquid waste is charged into the interior of the housing (2) through said at least one inlet opening (1), wherein said liquid waste is then contacted with the filling materials (3, 5), followed by entering said supply tank (8) through said at least one outlet opening (7), wherein said liquid waste is pumped from the supply tank (8) back towards the inlet opening by means of the pump (10) to form a cycle, wherein microorganisms populate at the surfaces of said porous filler material (3), which aerobically degrade nitrogen and optionally phosphorus from the liquid waste, so that nitrogen is converted to nitrate, wherein said liquid waste flows past said basic solid (5), whereby the pH of the waste is maintained in the range of 8 or lower, wherein a liquid phase containing nitrate can be removed through the first outlet (12), and a solid phase containing phosphate as a phosphate salt can be removed through the second outlet (13), separately from the waste from the supply tank (8).

4. The process according to claim 1, **characterized in that** said liquid waste is waste water or manure.

5. The process according to either of claims 3 or 4, **characterized in that** said basic solid is CaCO₃.

6. The process according to any of claims 3 to 5, **characterized in that** said contacting is effected in a filter, especially a trickle filter.

7. The process according to claim 1, **characterized in that** the nitrate-containing liquid phase is separated and dried to obtain nitrate salts.

## Revendications

1. Appareil pour la mise en oeuvre d'un procédé de traitement des déchets liquides comprenant des composants organiques qui contiennent de l'azote et du phosphore pour fabriquer des engrais, dans lequel l'azote est contenu sous la forme d'un composé d'azote organique, qui est converti en nitrate, et pendant cette conversion, les déchets sont mis en contact avec un solide basique, de manière que le pH des déchets soit maintenu dans une gamme faiblement basique, neutre ou acide, dans lequel l'azote et le phosphore sont éliminés des déchets séparément, où ledit appareil comprenant:
- au moins un boîtier (2) avec un espace allongé,
- au moins une aperture d'entrée (1) dans une extrémité du boîtier (2) pour admettre les déchets liquides,
- au moins une aperture de sortie (7) dans l'extrémité du boîtier (2) opposite de ladite aperture d'entrée (1),
- moyens de rétention (6) dans l'intérieur du boîtier pour diviser l'espace dans l'intérieur du boîtier en compartiments,
- au moins un premier matériau de charge (3), et au moins un deuxième matériau de charge (5) différent du premier, qui sont présents dans l'intérieur du boîtier (2), et sont retenus par les moyens de rétention (6) sur une position prévue, dans lequel ledit au moins un premier matériau de charge (3) est un matériau de charge poreux, sur la surface duquel des microorganismes peuvent se développer, dégradant l'azote et éventuellement le phosphore des déchets liquides par voie aérobie, et ledit au moins un deuxième matériau de charge (5) est un solide basique, qui est un carbonate ou bicarbonate de métaux alcalins ou de métaux alcalino-terreux comme contre-ion,
- au moins une ouverture (4) sur le côté longitudinal du boîtier (2), à travers laquelle du matériau de charge (3, 5) peut être chargé dans l'intérieur du boîtier,
- un réservoir de stockage (8), dans lequel les déchets liquides arrivent à travers l'ouverture de sortie (7), dans lequel ledit réservoir de stockage (8) présente au moins une première sortie (12) et au moins une deuxième sortie (13), dans lequel une phase liquide (9) contenant le nitrate peut être éliminée à travers la première sortie (12), et une phase solide (11) contenant du phosphore comme sel de phosphore peut être éliminée à travers la deuxième sortie (13), du réservoir de stockage (8), et
- une pompe (10) dans l'intérieur du réservoir de stockage,
dans lequel ledit boîtier (2) n'est pas immergé dans le réservoir de stockage (8), de manière que les déchets liquides puissent être pompés de nouveau vers l'ouverture d'entrée dans un cycle.

2. Appareil selon la revendication 1, **caractérisé en ce que** ledit au moins un premier matériau de charge (3) est choisi parmi une roche volcanique et/ou un minéral argileux, et/ou est un produit en vrac.

3. Un procédé utilisant un appareil selon la revendication 1 ou 2 pour traiter des déchets liquides comprenant des composants organiques qui contiennent de l'azote et du phosphore pour fabriquer des engrais, dans lequel l'azote est contenu sous la forme d'un composé d'azote organique, dans lequel les déchets liquides sont chargés dans l'intérieur du boîtier (2) à travers ladite au moins une aperture d'entrée (1), dans lequel les déchets liquides sont ensuite mis en contact avec les matériaux de charge (3, 5), et ensuite arrivent dans ledit réservoir de stockage (8) à travers ladite au moins une aperture de sortie (7), dans lequel les déchets liquides sont pompés dudit réservoir de stockage (8) de nouveau vers l'ouverture d'entrée au moyen de la pompe (10) pour établir un cycle, dans lequel des microorganismes se développent sur les surfaces dudit matériau de charge poreux (3), dégradant l'azote et éventuellement le phosphore des déchets liquides par voie aérobie, pour convertir l'azote en nitrate, dans lequel les déchets liquides s'écoulent au-delà du solide basique (5), de manière que le pH des déchets soit maintenu dans la gamme de 8 ou moins, dans lequel une phase liquide contenant du nitrate peut être éliminée à travers la première sortie (12), et une phase solide (11) contenant du phosphore comme sel de phosphore peut être éliminée à travers la deuxième sortie (13), du réservoir de stockage (8).

4. Procédé selon la revendication 1, **caractérisé en ce que** les déchets liquides sont des eaux usées ou du lisier.

5. Procédé selon l'une des revendications 3 ou 4, **caractérisé en ce que** ledit solide basique est le CaCO₃.

6. Procédé selon l'une quelconque des revendications 3 à 5, **caractérisé en ce que** ladite étape consistant à mettre en contact est effectuée dans un filtre, notamment dans un filtre à ruissellement.

7. Procédé selon la revendication 1, **caractérisé en ce que** ladite phase liquide contenant le nitrate est séparée et séchée pour obtenir des sels de nitrate.
